# EUROPÄISCHE PATENTSCHRIFT

(11) **EP 2 784 462 B1**
(45) Veröffentlichungstag und Bekanntmachung des Hinweises auf die Patenterteilung: **11.03.2015**
(21) Anmeldenummer: 13161336.6
(22) Anmeldetag: 27.03.2013
(51) Int. Cl.: G01L 9/00, G01L 19/00, G01L 19/04

(54) **Kapazitive Druckmesszelle zur Erfassung des Druckes eines an die Messzelle angrenzenden Mediums**
Capacitative pressure measurement cell for detecting the pressure of a medium adjacent to the measurement cell
Cellule de mesure de pression capacitive pour l'enregistrement de la pression d'un fluide adjacent à la cellule de mesure de pression

(43) Veröffentlichungstag der Anmeldung: 01.10.2014
(73) Patentinhaber: VEGA Grieshaber KG, 77709 Wolfach (DE)
(72) Erfinder: Fehrenbach, Josef, 77716 Haslach (DE); Jacob, Jörn, 77709 Wolfach (DE)
(74) Vertreter: Patentanwälte Westphal, Mussgnug & Partner

(56) Entgegenhaltungen:
- DE-A1- 4 011 901
- US-A1- 2002 026 835

## Beschreibung

Die Erfindung betrifft eine kapazitive Druckmesszelle zur Erfassung des Druckes eines an die Messzelle angrenzenden Mediums gemäß dem Oberbegriff des Patentanspruchs 1.

Solche Druckmesszellen sind bekannt und werden in vielen Bereichen der Prozesstechnik zur Prozessbeobachtung eingesetzt. Zur Druckmessung eines an die Messzelle angrenzenden Mediums weist die Messzelle eine elastische Messmembran auf, die in Abhängigkeit von dem innerhalb des Mediums herrschenden Drucks ausgelenkt wird, wobei die Auslenkung bzw. reversible Deformation der Membran in ein korrespondierendes elektrisches Messsignal elektromechanisch gewandelt wird. Als kapazitiver elektromechanischer Wandler bildet eine auf der dem Medium abgewandten Seite der Messmembran angeordnete Messelektrode zusammen mit einer auf einem Grundkörper gegenüberliegend angeordneten Gegenelektrode einen Messkondensator, dessen Kapazität sich in Abhängigkeit der druckbedingten Auslenkung der Messmembran ändert. Die Messmembran bildet zusammen mit dem Grundkörper eine gegenüber dem Medium druckdichte Messkammer.

Bei diesen kapazitiven Druckmesszellen besteht das Problem, dass bei einem Medium mit schnell wechselnden Temperaturen Messfehler bei der Messung des Druckes auftreten, da die Messemembran in direktem Kontakt mit dem Medium steht und daher von dessen Temperaturschwankungen beeinflusst wird.

Es ist bekannt, dass die Temperatur bzw. langsame Temperaturänderungen des Grundkörpers durch Messung von dessen Umgebungstemperatur ermittelt werden und mit diesen Temperaturmesswerten der Druckmesswert entsprechend korrigiert wird. Bei einem großen Temperaturunterschied zwischen der Messemembran und dem Grundkörper der Druckmesszelle, insbesondere wenn sich die Temperatur des Mediums schnell bzw. schlagartig ändert, führt diese Korrekturmethode trotzdem zu einem fehlerhaften Sprung des berechneten Druckmesswertes, der erst mit dem langsamen Durchwärmen der gesamten Druckmesszelle langsam auf den richtigen Messwert zurückgeht.

Des Weiteren ist es zur Bestimmung eines temperaturkompensierten Druckmesswertes bekannt, sowohl die Temperatur des Grundkörpers der Druckmesszelle als auch die Temperatur von deren Messmembran zu messen und mittels dieser beiden Temperaturmesswerte den Druckmesswert zu kompensieren.

So ist beispielsweise aus der DE 40 11 901 A1 eine kapazitive Druckmesszelle bekannt, bei welcher auf der Messmembran eine Widerstandsbahn aus einem Werkstoff mit temperaturabhängigem Widerstand angeordnet ist, wobei diese Widerstandsbahn kreisförmig um die eine Kondensatorplatte des Messkondensators bildende kreisförmige Messelektrode gelegt ist, so dass die Widerstandsbahn nur im Randbereich der Messmembran verläuft. Es hat sich jedoch gezeigt, dass die Anordnung der Widerstandsbahn im Randbereich die Temperatur der Messmembran nicht korrekt erfasst werden kann, da sich der Randbereich der Messmembran aufgrund eines Temperaturabflusses in die benachbarten Gehäuseteile schnell abkühlt und zu einem Messfehler führt.

Ausgehend von diesem Stand der Technik ist es Aufgabe der vorliegendem Erfindung, eine Druckmesszelle der eingangs genannten Art anzugeben, welche eine Temperaturmessung der Messmembran einer Druckmesszelle mit im Vergleich zum Stand der Technik höheren Messgenauigkeit erlaubt.

Diese Aufgabe wird gelöst durch eine Druckmesszelle mit den Merkmalen des Patentanspruchs 1.

Eine solche kapazitive Druckmesszelle zur Erfassung des Druckes eines an die Druckmesszelle angrenzenden Mediums, die eine elastische Messmembran, deren erste Seite zumindest teilweise mit dem Medium in Kontakt steht und deren von dem Medium abgewandten zweiten Seite eine Messelektrode und zur Temperaturmessung ein Widerstandselement aus einem Werkstoff mit temperaturabhängigem Widerstand aufweist, und die einen der zweiten Seite der Messmembran gegenüberliegend angeordneten Grundkörper mit einer eine Messkapazität mit der Messelektrode bildenden Gegenelektrode umfasst, zeichnet sich erfindungsgemäß dadurch aus, dass das Widerstandselement als Widerstandschicht zwischen der zweiten Seite der Messmembran und der Messelektrode ausgebildet ist.

Der Vorteil einer solchen erfindungsgemäßen Druckmesszelle liegt darin, dass für die Widerstandsschicht nahezu die gesamte zur Verfügung stehende Fläche der Messmembran verwendet werden kann und dadurch in die Temperaturmessung die Temperaturverhältnisse über die gesamte Messmembran erfasst wird und nur zu geringen Temperaturfehlern führt.

Ferner hat sich mit dieser erfindungsgemäßen Druckmesszelle gezeigt, dass eine schnelle bzw. abrupte Temperaturänderung des Mediums ebenso schnell und unmittelbar detektierbar ist.

Die Herstellung einer solchen Widerstandsschicht ist mit dem gleichen Prozess wie die Herstellung der Messelektrode möglich, wobei die beiden Schichten mittels einer Isolationsschicht voneinander getrennt werden. Zur Herstellung der Messelektrode und der Widerstandsschicht kann jeweils der gleiche Werkstoff, bspw. Gold oder unterschiedliche Werkstoffe, wie bspw. Gold für die Messelektrode und Platin/Platinverbindungen für die Widerstandsschicht verwendet werden.

Besonders vorteilhaft ist es gemäß einer Ausgestaltung der Erfindung, wenn die die Widerstandsschicht und die Messelektrode im Wesentlichen kongruent zueinander ausgebildet sind. Damit können sowohl die Messelektrode als auch die Widerstandsschicht mit der gleichen Maske hergestellt werden.

Weiterhin ist gemäß einer Ausgestaltung der Erfindung die Widerstandsschicht strukturiert, vorzugsweise mäanderförmig strukturiert. Die Isolationsschicht dient dann gleichzeitig als Planarisierungsschicht der strukturierten Widerstandsschicht, so dass die Messelektrode auf die planare Isolationsschicht aufgebracht werden kann.

Schließlich ist es vorteilhaft, wenn die Messmembran und/oder der Grundköper aus einem Keramikmaterial hergestellt sind/ist.

Die erfindungsgemäße Druckmesszelle kann mit Vorteil zum Aufbau von Druckmessumformer verwendet werden.

Die Erfindung wird nachstehend anhand von Ausführungsbeispielen unter Bezugnahme auf die beigefügten Figuren erläutert.

Es zeigen:
- Figur 1: eine schematische Schnittdarstellung einer Druckmesszelle als Ausführungsbeispiel gemäß der Erfindung,
- Figur 2: eine Ausschnittsvergrößerung aus Figur 1,
- Figur 3: ein erstes Ausführungsbeispiel einer strukturierten Widerstandsschicht und
- Figur 4: ein zweites Ausführungsbeispiel einer strukturierten Widerstandsschicht.

Diese kapazitive Messzelle 1 umfasst eine aus einem keramischen Grundkörper 3 und einer ebenso aus Keramik hergestellten Messmembran 2 gebildeten Messkammer 6. Die Messmembran 2 und der Grundkörper 3 sind zur Herstellung der druckdichten Messkammer 6 randseitig über einen bspw. aus Glas, Glaslot oder einer Glaslegierung hergestellten Abstandshalter 3a auf Abstand gehalten und miteinander verbunden.

Mit ihrer äußeren ersten Seite 2a steht die Messmembran 2 mit einem Medium in Kontakt, dessen Druck mit der Messzelle 1 gemessen werden soll. Die innere zweite Seite 2b der Messmembran 2 ist mit einer Widerstandsschicht 4 aus einem Werkstoff mit temperaturabhängigem Widerstand belegt. Diese Widerstandsschicht 4 ist entweder vollflächig und kreisförmig ausgebildet oder strukturiert, bspw. mäanderförmig strukturiert ausgeführt. Änschlussleitungen 4a, 4b sind randseitig über den Abstandshalter 3a und den Grundkörper 3 zu einer Elektronikeinheit (nicht dargestellt) geführt. Die Widerstandsschicht 4 erwärmt sich entsprechend der Messmembran 2, mit der Folge eines sich entsprechend der Temperatur der Messmembran 2 ändernden Widerstandwertes der als Messwert zur Bestimmung der Temperatur der Messmembran ausgewertet wird.

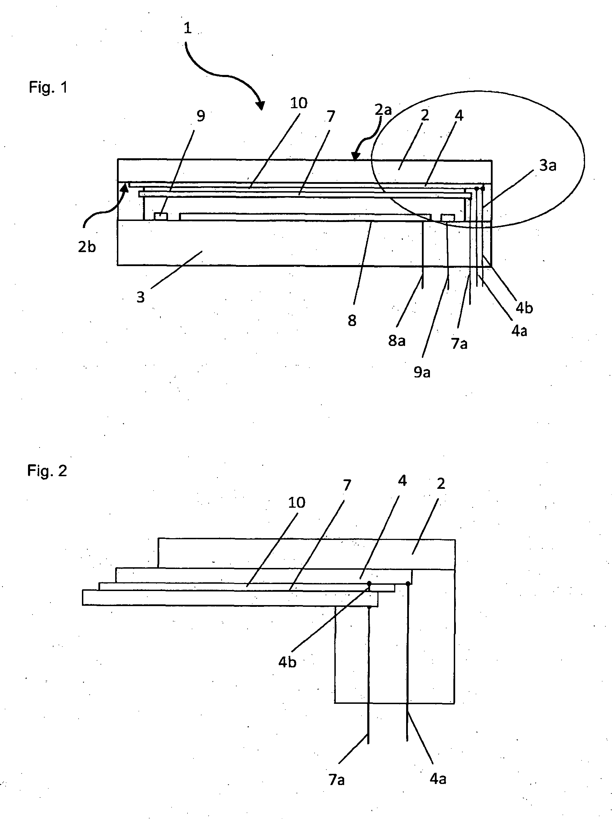

Auf der Widerstandsschicht 4 ist zentrisch unter Zwischenschaltung einer Isolationsschicht eine Messelektrode 7 angeordnet. Gemäß Figur 1 ist diese Messelektrode 7 mit kleinerem Durchmesser als der Durchmesser der Widerstandsschicht 4 ausgeführt, wobei sowohl die Messelektrode 7 als auch die Widerstandsschicht 4 bis in den Bereich des Abstandshalters 3a hineinragen und ihre jeweiligen Anschlussleitungen 4a, 4b bzw. en 7a in der Glaslotschicht geführt sind. Im vorliegenden Ausführungsbeispiel ist die Widerstandsschicht 4 mit einer größeren Grundfläche ausgeführt als die Fläche der Messelektrode 7, d.h. die Widerstandsschicht 4 überragt die Messelektrode 7 in radialer Richtung. Das hat den Vorteil, dass die Kontaktierung der jeweiligen Schicht ohne zusätzliche Leitungsführung direkt erfolgen kann.

Jedoch können auch die Schicht der Messelektrode 4 und die Widerstandsschicht 4 kongruent zueinander erzeugt werden.

Ist die Widerstandsschicht 4 mäanderförmig strukturiert, dient die Isolationsschicht gleichzeitig als Planarisierungsschicht der Widerstandsschicht 4, so dass die Messelektrode 7 auf dieser planarisierten Widerstandsschicht 4 aufgetragen werden kann. Die Anschlussleitungen 4a, 4b der Widerstandsschicht 4 können dann bspw. auf radial gegenüberliegenden Seiten angeordnet und durch die Glasnaht 7a geführt sein.

In einer weiteren Ausgestaltungsform, die hier nicht näher dargestellt ist, kann die Widerstandsschicht 4 auch mit einer Grundfläche ausgeführt sein, die kleiner als die Fläche der Messelektrode 7 gewählt und zu der umlaufenden Glasnaht 7a beabstandet angeordnet ist. In diesem Fall wird eine Temperaturmittlung über einen Zentralbereich der Messmembran 2 erreicht, wobei ein Einfluss einer Einbauanordnung, die durch ihre größere Masse gegenüber der Messmembran 2 thermisch träger ist, ausgeblendet wird.

Diese Messelektrode 7 bildet zusammen mit einer auf der gegenüberliegenden Oberfläche des Grundkörpers 3 angeordneten, kreisförmigen Gegenelektrode 8 einen Messkondensator, dessen gemessene Kapazität von der durch den Mediendruck bewirkten Auslenkung der Messmembran 2 abhängt. Die Gegenelektrode 8 wird von einer kreisringförmigen Referenzelektrode 9 umschlossen, die zusammen mit der Messelektrode 7 einen Referenzkondensator bildet, dessen Referenzkapazität aufgrund deren Position am äußeren Rand der Messkammer 6, in dem die Messmembran wesentlichen keine Auslenkung zeigt, nahezu konstant ist. Die Messelektrode 7, die Gegenelektrode 8 sowie die Referenzelektrode 9 werden jeweils über Anschlussleitungen 7a, 8a bzw. 9a mit einer Elektronikeinheit (nicht dargestellt) der Messzelle 1 verbunden..

Figur 2 zeigt eine Ausschnittsvergrößerung aus Figur 1 im Bereich der Anschlussleitungen der Widerstandsschicht 4.

In Figur 2 ist besonders gut ein Schichtaufbau aus Messelektrode 7, Isolationsschicht 10, Widerstandsschicht 4 und Messmembran 2 zu erkennen. Wie in Figur 2 gezeigt sind sowohl die Messelektrode 7 als auch die Widerstandsschicht 4 bis in die radial angeordnete Glasnaht, die auch als Abstandshalter 7a dient, ausgebildet. Auf diese Weise ist es möglich, dass sowohl die Messelektrode 7 als auch die Widerstandsschicht 4 von senkrecht zu diesen in der Glasnaht verlaufenden Anschlussleitungen 7a, 4a, 4b kontaktierbar sind.

Aus Figur 2 ist außerdem gut ersichtlich, dass die Isolationsschicht 10 die Messelektrode 7 in Radialrichtung überragt, sodass eine zuverlässige Isolation der Messelektrode 7 gegenüber der Widerstandsschicht 4 erfolgt.

In Figur 2 ist außerdem als eine weitere Möglichkeit dargestellt, dass die zweite Anschlussleitung 4b zur Temperaturmessung intern mit der Messelektrode 7 verbunden sein kann, sodass die Temperaturmessung zwischen den Elektroden 7a und 4a stattfinden kann. Damit erübrigt sich die Herausführung der Anschlussleitung 4b.

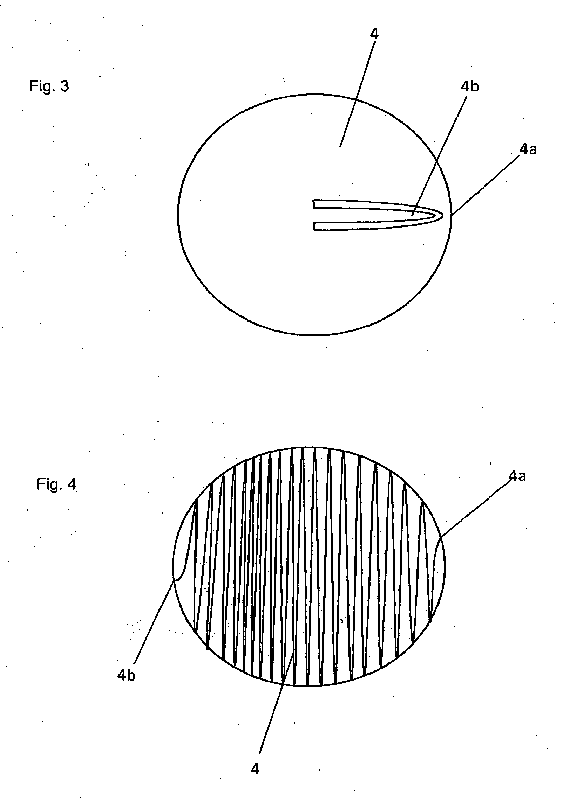

Figur 3 zeigt ein erstes Ausführungsbeispiel einer Widerstandsschicht 4 wie sie in dem Sensor aus den Figuren 1 und 2 zum Einsatz kommen kann, in Draufsicht.

Bei dem Ausführungsbeispiel aus Figur 3 ist die Metallisierung für die Widerstandsschicht 4 vollflächig ausgeführt und weist zur Erzeugung eines hinreichend langen Strompfades und damit eines hinreichend großen Widerstandes eine u-förmige Aussparung auf, innerhalb derer der zweite Anschlussleiter 4b zungenförmig hineinragend, angeordnet ist.

Figur 4 zeigt ein weiteres Ausführungsbeispiel einer Widerstandsschicht 4 in Draufsicht, wobei die Widerstandsschicht 4 in dieser Ausführungsform auf einer kreisförmigen Grundfläche mäanderförmig ausgestaltet ist. Durch das Vorsehen einer Vielzahl von Mäandern bzw. Schleifen kann ein im Vergleich zu dem Ausführungsbeispiel aus Figur 3 sehr langer Strompfad und damit auch ein wesentlich größerer Widerstand zur Temperaturmessung erzeugt werden. In dem Ausführungsbeispiel aus Figur 4 sind die Anschlussleiter 4a, 4b der Widerstandsschicht an radial gegenüberliegenden Seiten der Widerstandsschicht 4 angeordnet, können aber auch, bspw. durch eine in Umfangsrichtung verlaufende Leiterbahn wie in den Figuren 1 und 2 dargestellt unmittelbar nebeneinander durch den Abstandshalter 7a geführt sein.

Bei dieser Messzelle 1 werden die messfehlerbehafteten Druckmesssignale, die von dem Messkondensator erzeugt werden, mittels der aus den temperaturabhängigen Widerstandsmesswerten der Widerstandsschicht 4 bestimmten Temperaturwerte entsprechend eines vorgegebenen Algorithmus korrigiert bzw. kompensiert.

### Bezugszeichen

- 1: Druckmesszelle
- 2: Messmembran
- 2a: erste Seite der Messmembran 2
- 2b: zweite Seite der Messmembran 2
- 3: Grundkörper
- 3a: Abstandshalter
- 4: Widerstandsschicht
- 4a: erste Anschlussleitung der Widerstandsschicht 4
- 4b: zweite Anschlussleitung der Widerstandsschicht 4
- 6: Messkammer der Druckmesszelle 1
- 7: Messelektrode
- 7a: Anschlussleitung der Messelektrode 7
- 8: Gegenelektrode
- 8a: Anschlussleitung der Gegenelektrode
- 9: Referenzelektrode
- 9a: Anschlussleitung der Referenzelektrode

## Patentansprüche

1. Kapazitive Druckmesszelle (1) zur Erfassung des Druckes eines an die Druckmesszelle (1) angrenzenden Mediums, umfassend
- eine elastische Messmembran (2), deren erste Seite (2a) zumindest teilweise mit dem Medium in Kontakt steht und deren von dem Medium abgewandten zweiten Seite (2b) eine Messelektrode (7) und zur Temperaturmessung ein Widerstandselement aus einem Werkstoff mit temperaturabhängi^{g}em Widerstand aufweist, und
- einen der zweiten Seite (2b) der Messmembran (2) gegenüberliegend angeordneten Grundkörper (3) mit einer eine Messkapazität mit der Messelektrode (7) bildenden Gegenelektrode (8),
**dadurch gekennzeichnet, dass** das Widerstandselement als Widerstandschicht (4) zwischen der zweiten Seite (2b) der Messmembran (2) und der Messelektrode (7) ausgebildet ist.

2. Druckmesszelle (1) nach Anspruch 1,
**dadurch gekennzeichnet, dass** die die Widerstandsschicht (4) und die Messelektrode (7) im Wesentlichen kongruent zueinander ausgebildet sind.

3. Druckmesszelle (1) nach Anspruch 1 oder 2,
**dadurch gekennzeichnet, dass** die Widerstandsschicht (4) strukturiert ist.

4. Druckmesszelle (1) nach Anspruch 3,
**dadurch gekennzeichnet, dass** die Widerstandsschicht (4) mäanderförmig strukturiert ist.

5. Druckmesszelle (1) nach einem der vorhergehenden Ansprüche,
**dadurch gekennzeichnet, dass** die Messmembran (2) und/oder der Grundköper (3) aus einem Keramikmaterial hergestellt sind/ist.

6. Druckmesszelle nach einem der vorhergehenden Ansprüche, **dadurch gekennzeichnet, dass** die Widerstandsschicht (4) mit einer Grundfläche ausgebildet ist, die größer ist, als eine Fläche der Messelektrode (7).

7. Druckmesszelle nach einem der Ansprüche 1 bis 5,
**dadurch gekennzeichnet, dass** die Widerstandsschicht (4) mit einer Grundfläche ausgebildet ist, die kleiner ist, als eine Fläche der Messelektrode, wobei die Widerstandsschicht zu einer umlaufend ausgebildeten Glasnaht radial beabstandet ausgebildet ist.

8. Druckmessumformer mit einer Druckmesszelle (1) nach einem der vorhergehenden Ansprüche.

## Claims

1. Capacitive pressure measurement cell (1) for recording the pressure of a medium adjacent to the cell (1), comprising
- an elastic measurement membrane (2), whose first side (2a) is at least partially in contact with the medium, and whose second side (2b), facing away from the medium, has a measurement electrode (7), as well as a resistor element made from a substance with temperature dependent resistance, for measuring temperature, and
- a base body (3), with a measurement capacity provided by a counter electrode (8) which forms a measurement electrode (7), positioned opposite the second side (2b) of the measurement membrane (2),
**characterised by** the fact that the resistor element is designed as a resistance layer (4) between the second side (2b) of the measurement membrane (2) and the measurement electrode (7).

2. Pressure measurement cell (1) in accordance with Claim 1, **characterised by** the fact that the resistance layer (4) and the measurement electrode (7) are primarily designed as being congruent to each other.

3. Pressure measurement cell (1) in accordance with Claims 1 or 2, **characterised by** the fact that the resistance layer (4) is structured.

4. Pressure measurement cell (1) in accordance with Claim 3, **characterised by** the fact that the resistance layer (4) is constructed in a meandering pattern.

5. Pressure measurement cell (1) in accordance with one of the foregoing claims, **characterised by** the fact that the measurement membrane (2) and/or the base body (3) is/are made,from a ceramic material.

6. Pressure measurement cell in accordance with one of the foregoing claims, **characterised by** the fact that the resistance layer (4) is designed with an area which is larger than one surface of the measurement electrode (7).

7. Pressure measurement cell in accordance with one of Claims 1 to 5, **characterised by** the fact that the resistance layer (4) is designed with an area which is smaller than one surface of the measurement electrode, whereby the resistance layer is made as a radially spaced glass seam of all round design.

8. Pressure transducer with a pressure measurement cell (1) in accordance with one of the foregoing claims.

## Revendications

1. Cellule de mesure de pression capacitive (1) pour permettre de déterminer la pression d'un fluide contigu à la cellule de mesure de pression (1) comprenant :
- une membrane de mesure élastique (2) dont la première face (2a) est au moins partiellement en contact avec le fluide et dont la seconde face (2b) située à l'opposé du fluide comporte une électrode de mesure (7) et pour permettre la mesure de la température un élément de résistance réalisé en un matériau ayant une résistance dépendant de la température, et
- un corps de base (3) situé à l'opposé de la seconde face (2b) de la membrane de mesure (2) muni d'une contre électrode (8) formant une capacité de mesure avec l'électrode de mesure (7),
**caractérisée en ce que**
l'élément de résistance est réalisé sous la forme d'une couche résistante (4) située entre la seconde face (2b) de la membrane de mesure (2) et l'électrode de mesure (7).

2. Cellule de mesure de pression (1) conforme à la revendication 1,
**caractérisée en ce que**
la couche résistante (4) et l'électrode de mesure (7) sont réalisées essentiellement en coïncidence l'une par rapport à l'autre.

3. Cellule de mesure de pression (1) conforme à la revendication 1 ou 2,
**caractérisée en ce que**
la couche résistante (4) est structurée.

4. Cellule de mesure de pression (1) conforme à la revendication 3,
**caractérisée en ce que**
la couche résistante (4) a une structure en forme de méandres.

5. Cellule de mesure de pression (1) conforme à l'une des revendications précédentes,
**caractérisée en ce que**
la membrane de mesure (2) et/ou le corps de base (3) est ou sont réalisé(s) en un matériau céramique.

6. Cellule de mesure de pression (1) conforme à l'une des revendications précédentes,
**caractérisée en ce que**
la couche résistante (4) est réalisée avec ou une surface de base qui est supérieure à la surface de l'électrode de mesure (7).

7. Cellule de mesure de pression (1) conforme à l'une des revendications 1 à 5,
**caractérisée en ce que**
la couche résistante (4) est réalisée avec une surface de base qui est inférieure à la surface de l'électrode de mesure, la couche résistante étant réalisée à distance radiale d'une jointure en verre périphérique.

8. Transformateur de mesure de pression comportant une cellule de pression (1) conforme à l'une des revendications précédentes.
